# FASCICULE DE BREVET EUROPEEN

(11) **EP 3 371 500 B1**
(45) Date de publication et mention de la délivrance du brevet: **19.02.2020**
(21) Numéro de dépôt: 16809957.0
(22) Date de dépôt: 02.11.2016
(51) Int. Cl.: F16L 3/13, F16L 3/123, H02G 3/00, H02G 3/32

(54) **PIÈCE DE MAINTIEN D'ÉLÉMENTS LONGILIGNES TELS QUE DES CÂBLES OU TUBES, SUR UNE SURFACE DE SUPPORT**
BAUTEIL ZUM HALTEN LÄNGLICHER ELEMENTE WIE KABEL ODER ROHRE AUF EINER TRAGFLÄCHE
COMPONENT FOR HOLDING LONGILINEAR ELEMENTS SUCH AS CABLES OR TUBES ON A SUPPORT SURFACE

(30) Priorité: 06.11.2015 FR 1560660
(43) Date de publication de la demande: 12.09.2018
(73) Titulaire: LISI Automotive Rapid, 95650 Puiseux-Pontoise (FR)
(72) Inventeur: NGUYEN, Benjamin, 77640 Jouarre (FR)
(74) Mandataire: Berger, Helmut
(86) Numéro de dépôt international: PCT/FR2016/052833
(87) Numéro de publication internationale: WO 2017/077230

(56) Documents cités:
- EP-A2- 2 221 518
- WO-A2-2013/056018
- DE-C1- 19 648 044
- FR-A1- 2 491 165
- US-A- 5 846 017

## Description

Pièce de maintien d'éléments longilignes tels que des câbles ou tubes, sur une surface de support.

L'invention concerne une pièce de maintien d'éléments longilignes tels que des câbles ou tubes, sur une surface de support, du type décrit dans le préambule de la revendication 1.

Une pièce de ce type est déjà connue par le document US 5 846 017. Or cette pièce connue présente l'inconvénient majeur d'être très encombrant puisque les moyens d'obstruction de l'ouverture d'insertion dans le logement et d'extraction de celui-ci sont formés par deux pattes qui s'étendent au-dessus du logement et dont l'une comporte une partie de rampe d'obstruction.

L'invention a pour but de pallier cet inconvénient.

Pour atteindre ce but, la pièce de maintien selon l'invention comprend les caractéristiques qui sont énoncées dans la partie caractérisante de la revendication 1.

D'autres caractéristiques avantageuses sont indiquées dans des revendications dépendantes.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un seul mode de réalisation de l'invention et dans lesquels :

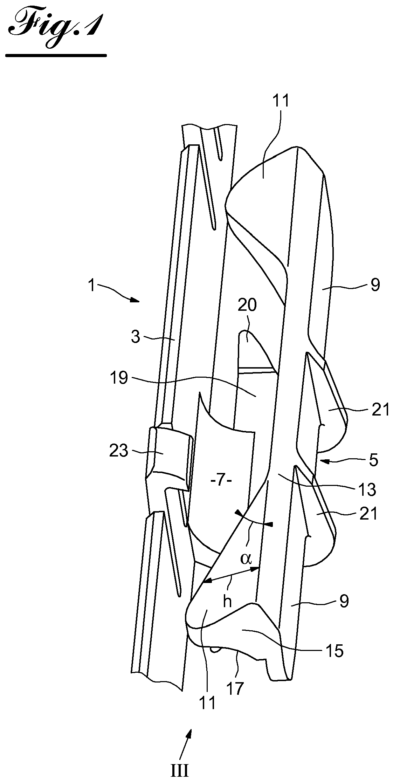

- la figure 1 est une vue en perspective d'une pièce de maintien d'un élément longiligne selon l'invention ;

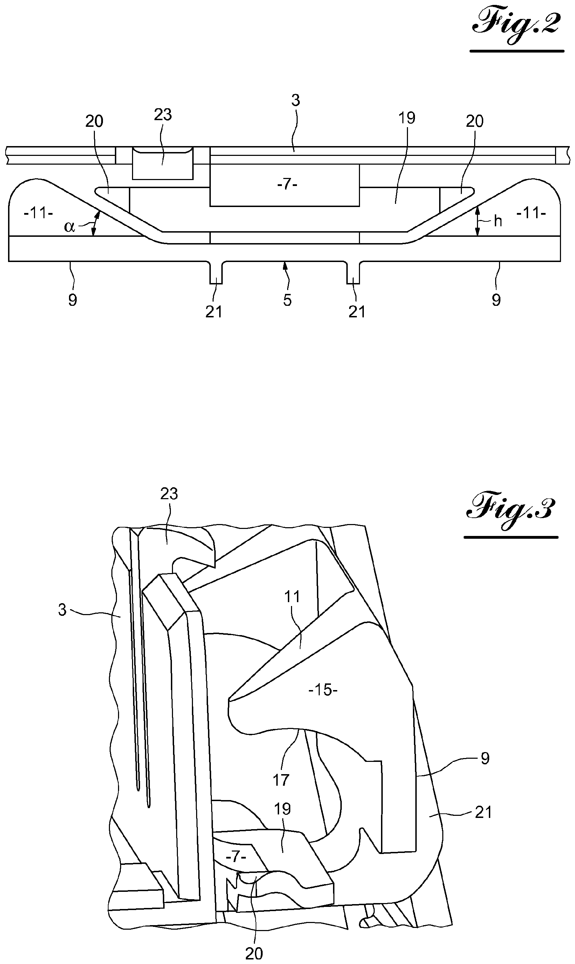

- la figure 2 est une vue de dessus de la pièce de la figure 1 ;
- la figure 3 est une vue en perspective en direction de la flèche III de la figure 1, et
- la figure 4 est une vue en perspective, notamment du dessous de la pièce de la figure 1.

Comme le montrent les figures, la pièce de maintien selon l'invention notée 1, présente la forme d'une goulotte en matière plastique. Cette pièce comporte deux parois latérales parallèles opposées 3, 5 et une paroi de fond 7, transversale et plus étroite. Dans le cas de la pièce 1 représentée à titre d'exemple non limitatif, la paroi 3 est plus longue que la paroi 5 de façon à pouvoir constituer une paroi d'un dispositif de support plus complexe.

La paroi latérale opposée 5, moins large, se prolonge au niveau de ces deux extrémités, dans le sens longitudinal de la goulotte, par deux pattes 9 qui sont flexibles perpendiculaires au plan de la paroi latérale. Chaque patte 9 est pourvue à son extrémité longitudinale supérieure libre d'une paroi rigide 11 qui est inclinée en direction du fond de la goulotte par exemple d'un angle de 45° de façon à former une rampe d'insertion de l'élément longiligne dans la goulotte. Comme le montre la figure, les rampes 11 obstruent l'ouverture d'insertion de la goulotte. Chaque rampe 11 présente la forme d'un triangle dont la hauteur h augmente progressivement dans la direction longitudinale de la goulotte à partir du bord 13 de la paroi rigide 5. Lors de l'insertion d'un élément longiligne dans la goulotte par application forcée de l'élément sur les rampes inclinées 11, celles-ci, en fléchissant perpendiculairement à la paroi 5, vers l'extérieur, sous l'effet de la force de pression exercée, doivent dégager l'ouverture d'insertion de la goulotte. A cette fin, l'angle d'inclinaison α des rampes triangulaires 11 est choisi de façon que le dégagement de l'ouverture par flexion des rampes puisse se produire.

Pour rigidifier l'ensemble formé par les pattes 9 et les rampes 11, une paroi de rigidification 15 transversale à la direction longitudinale de la goulotte est prévue à chaque extrémité libre de la patte. Le bord libre 17 de cette paroi, orienté vers le fond de la goulotte est dépourvu d'une inclinaison par rapport à la direction de flexion ou ne présente qu'un angle relativement faible.

Il est encore à noter que le fond du logement 7 est formé par une paroi de support 7 qui est prolongée dans la direction longitudinale de la goulotte, à chaque côté, par une portion de paroi rigide en forme de patte 19 se terminant par une extrémité 20 recourbée vers l'ouverture de la goulotte. D'autre part, la rigidité de la paroi 5 est renforcée par des éléments de nervure de renfort 21 qui s'étendent à partir du fond de la goulotte sur la face latérale extérieure jusqu'au bord supérieur de la paroi.

De plus, pour améliorer encore la qualité de maintien d'un élément longiligne dans le logement de la goulotte, la paroi latérale 3 peut comporter à son bord supérieur longitudinal libre des petites saillies 23 qui s'étendent en direction de la paroi latérale opposée 5. Les figures montrent une saillie au niveau de la naissance d'une rampe inclinée 17.

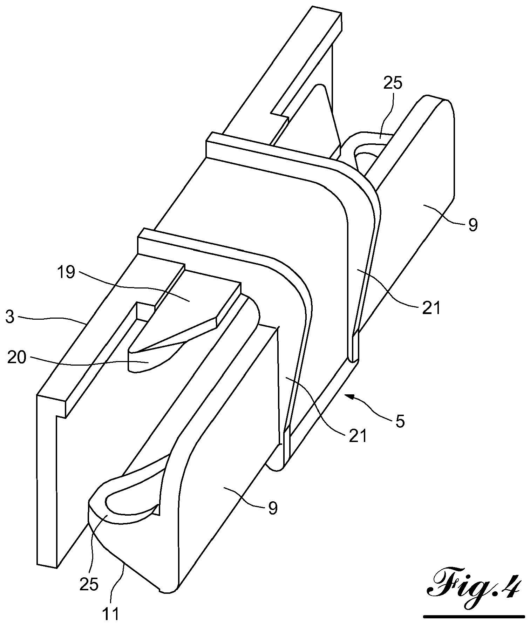

Les pièces de maintien selon l'invention sont avantageusement réalisées en matière plastique, par moulage, les rampes inclinées étant formées par une configuration appropriée des parois d'une certaine épaisseur comme le montre la figure 4, par exemple en 25.

Concernant le fonctionnement de la pièce selon l'invention, pour insérer dans le logement une pièce longiligne, tel qu'un câble ou un tube, on place celui-ci sur les rampes inclinées 11. En poussant l'élément en appui sur les rampes 11 en direction du fond du logement, on provoque la flexion des pattes 9, perpendiculairement à la paroi 5, vers l'extérieur. Etant donné la forme triangulaire des rampes inclinées 11 dont la hauteur augmente en direction de l'extrémité libre des rampes, c'est-à-dire en direction de l'augmentation du degré de flexion, l'ouverture est dégagée pour permettre l'insertion de l'élément longiligne dans le logement.

Après l'insertion, les pattes reviennent élastiquement dans leur position d'origine et les rampes obstruent l'ouverture.

L'élément se trouve ainsi emprisonné dans le logement. Etant donné la rigidité des rampes inclinées 11 et l'inclinaison zéro ou faible du bord inférieur 17 des parois de rigidification 15 des rampes, ces dernières résistent efficacement à des forces d'extraction de l'élément. En effet, l'application d'une force d'extraction exercée par l'élément sur ce bord ne provoque pas une flexion des pattes. Pour permettre l'extraction, il faudrait provoquer la flexion des pattes 9 par des forces extérieures exercées sur les faces supérieures des rampes, c'est-à-dire des forces orientées dans la direction opposée à la direction de sortie de l'élément emprisonné dans le logement.

## Revendications

1. Pièce de maintien d'éléments longilignes, tels que des câbles ou tubes, sur une surface de support, du type comprenant un logement d'un élément longiligne et des moyens d'obstructions de l'ouverture d'insertion dans le logement et d'extraction de celui-ci, qui sont élastiquement déplaçables de leur position d'obstruction en une position de dégagement de l'ouverture et comportent une partie de rampe inclinée de provocation dudit déplacement de dégagement lors de l'insertion d'un élément dans le logement par application sous pression de l'élément sur la partie de rampe, le logement étant en forme d'une goulotte comportant deux parois latérales (3, 5), sensiblement rigides, **caractérisé en ce qu'**une (5) de ces parois se prolonge dans la direction longitudinale de la goulotte au niveau d'au moins une extrémité par une patte (9) flexible dans la direction perpendiculaire au plan de la paroi, vers l'extérieur, et que cette patte flexible est pourvue à son bord supérieur libre de ladite rampe (11) inclinée en direction du fond de la goulotte et dont la hauteur (h) perpendiculaire au bord supérieur de la patte augmente à partir de l'extrémité de la paroi fixe (5) de façon que l'ouverture du logement soit dégagée lors de la flexion de la patte (9) sous l'effet d'une force d'application exercée sur la rampe (11) pour l'insertion de l'élément longiligne dans le logement.

2. Pièce selon la revendication 1, **caractérisée en ce que** la rampe (11) est en forme d'un triangle.

3. Pièce selon l'une des revendications 1 et 2, **caractérisée en ce que** la rampe est rigidifiée par rapport à la patte flexible (9) par une paroi de rigidification (15) s'étendant perpendiculairement à la direction longitudinale de la goulotte entre la rampe et la patte flexible.

4. Pièce selon la revendication 3, **caractérisée en ce que** le bord inférieur (17) de la paroi de rigidification (15), en regard d'un élément longiligne emprisonné dans le logement, est dépourvu d'une inclinaison par rapport à la direction de flexion de la patte flexible (9), susceptible de produire une force de flexion lors d'une force d'extraction exercée par l'élément sur le bord.

5. Pièce selon l'une des revendications précédentes **caractérisée en ce qu'**elle est réalisée en un matériau plastique.

## Patentansprüche

1. Bauteil zum Halten länglicher Elemente, wie z.B. Kabel oder Rohre, auf einer Tragfläche, umfassend ein Gehäuse für ein längliches Element und Mittel zum Sperren der Einführöffnung im Gehäuse und zum Entnehmen des Gehäuses, die aus ihrer Sperrstellung in eine Freigabestellung der Öffnung elastisch verschoben werden können und ein Rampenteil zur Veranlassung der Verschiebung bei der Einführung eines Elements in das Gehäuse durch Anwenden des Elements unter Druck auf das rampentel umfassen, wobei das Gehäuse in Form eines Gerinnes mit zwei im Wesentlichen steifen Seitenwandungen (3, 5) vorliegt, **dadurch gekennzeichnet, dass** eine (5) der Wandungen sich in Längsrichtung des Gerinnes auf Höhe mindestens eines Ende durch ein flexibles Bein (9) in senkrecht zur Ebene der Wandung nach außen erstreckt und dass jedes flexible Bein an seiner freien Oberkante mit der Rampe (11) versehen ist, die in Richtung des Bodens des Gerinnes geneigt ist und deren Höhe (h) senkrecht zur Oberkante des Beins vom Ende der ortsfesten Wandung (5) her zunimmt, sodass die Öffnung des Gehäuses freigegeben wird, wenn das Bein (9) unter Einwirkung einer Einwirkung einer Andruckkraft auf die Rampe (11) zur Einführung des länglichen Elements in das Gehäuse verbogen wird.

2. Bauteil nach Anspruch 1, **dadurch gekennzeichnet, dass** die Rampe (11) dreieckig ist.

3. Bauteil nach einem der Ansprüche 1 und 2, **dadurch gekennzeichnet, dass** die Rampe relativ zum flexiblen Bein (9) durch eine Versteifungswandung (15) versteift wird, die sich senkrecht zur Längsrichtung des Gerinnes zwischen der Rampe und dem flexiblen Bein erstreckt.

4. Bauteil nach Anspruch 3, **dadurch gekennzeichnet, dass** die Unterkante (17) der Versteifungswandung (15) gegenüber einem im Gehäuse festgehaltenen länglichen Element keine Neigung bezogen auf die Biegungsrichtung des flexiblen Beins (9) aufweist, die eine Biegekraft erzeugen könnte, während das Element auf die Kante eine Entnahmekraft ausübt.

5. Bauteil nach einem der vorstehenden Ansprüche, **dadurch gekennzeichnet, dass** dieses aus Kunststoff besteht.

## Claims

1. A component for holding longilinear elements, such as cables or tubes, on a support surface, of the type comprising a housing of a longilinear element and means for obstructing the opening for insertion in the housing and removal therefrom, which are resiliently movable from their obstruction position to a clearance position of the opening and including an inclined ramp part for causing said clearance movement during the insertion of an element into the housing by application under pressure of the element on the ramp part, the housing being in the form of a trough including two side parts (3, 5), which are substantially rigid, **characterized in that** one (5) of these walls extends in the longitudinal direction of the trough level with at least one end by a flexible tab (9) in the direction perpendicular to the plane of the wall, toward the outside, and **in that** this flexible tab is provided at its free upper edge with said ramp (11) inclined toward the bottom of the trough and the height (h) of which perpendicular to the upper edge of the tab increases from the end of the fixed wall (5) such that the opening of the housing is released during the bending of the tab (9) under the effect of an application force exerted on the ramp (11) for the insertion of the longilinear element into the housing.

2. The component according to claim 1, **characterized in that** the ramp (11) is in the shape of a triangle.

3. The component according to one of claims 1 and 2, **characterized in that** the ramp is stiffened relative to the flexible tab (9) by a stiffening wall (15) extending perpendicular to the longitudinal direction of the trough between the ramp and the flexible tab.

4. The component according to claim 3, **characterized in that** the lower edge (17) of the stiffening wall (15), opposite a longilinear element captured in the housing, is devoid of an incline relative to the bending direction of the flexible tab (9), capable of producing a bending force during a removal force exerted by the element on the edge.

5. The component according to one of the preceding claims, **characterized in that** it is made from a plastic material.
